# EUROPEAN PATENT APPLICATION

(11) **EP 1 990 542 A1**
(43) Date of publication of application: **12.11.2008**
(21) Application number: 07708218.8
(22) Date of filing: 08.02.2007
(51) Int. Cl.: F04B 27/14, F04B 49/00

(54) **CONTROL VALVE FOR COMPRESSOR**

(30) Priority: 01.03.2006 JP 2006054329
(71) Applicant: TGK COMPANY, LTD., Tokyo 193-0942 (JP)
(72) Inventor: HIROTA, Hisatoshi, Hachioji-shi, Tokyo 1930942 (JP)
(74) Representative: Grünecker, Kinkeldey, Stockmair & Schwanhäusser Anwaltssozietät
(86) International application number: PCT/JP2007/052194
(87) International publication number: WO 2007/099752

(57) **Abstract**

To improve the pressure resistance strength of a pressure-sensing section of a control valve for a internal variable control compressor.

In the control valve (1), a stack of snap-acting discs (24) is disposed on a side of a diaphragm (23) forming the pressure-sensing section opposite from a transmitting member (19). With this arrangement, even if the diaphragm (23) receives large suction pressure Ps when the valve is closed, since the snap-acting disc (24) receives suction pressure Ps from the opposite side, the diaphragm (23) is prevented from being broken or deformed. This makes it possible to improve the pressure resistance strength of the pressure-sensing section. As a result, even if the control valve is applied to a refrigeration cycle in which suction pressure Ps becomes high, such as one using carbon dioxide as refrigerant, it is possible to secure sufficient pressure resistance strength.

## Description

### Technical Field

The present invention relates to a control valve for a compressor, and more particularly to a control valve for an internal variable control compressor, which is disposed in such an internal variable control compressor as a component of a refrigeration cycle of an automotive air conditioner, and is suitable for controlling the displacement or the refrigerant discharge capacity of the compressor.

### Background Art

In a refrigeration cycle for an automotive air-conditioner, in general, a variable displacement compressor is used to control refrigeration capacity thereof according to a load thereon. To vary the displacement of the compressor, there are known an internal variable control method in which the control is performed only by making use of an internal mechanical construction of the variable displacement compressor, and an external variable control method in which the control is electrically performed using a magnet coil or the like, based on results of calculation of various sensor outputs. Here, a description will be given of a control valve for an internal variable control compressor which is controlled by the internal variable control method.

The control valve for the internal variable control compressor includes a power element having a pressure-sensing member that senses suction pressure of the compressor, and a valve section that generates crankcase pressure in a crankcase into which discharge pressure of the compressor is delivered via the valve section, according to the pressure sensed by the pressure-sensing member. A bellows or a diaphragm is used as the pressure-sensing member. However, to make the control valve for the compressor compact in construction as a whole, a diaphragm made of e.g. sheet metal is used (see e.g. Patent Literature 1).

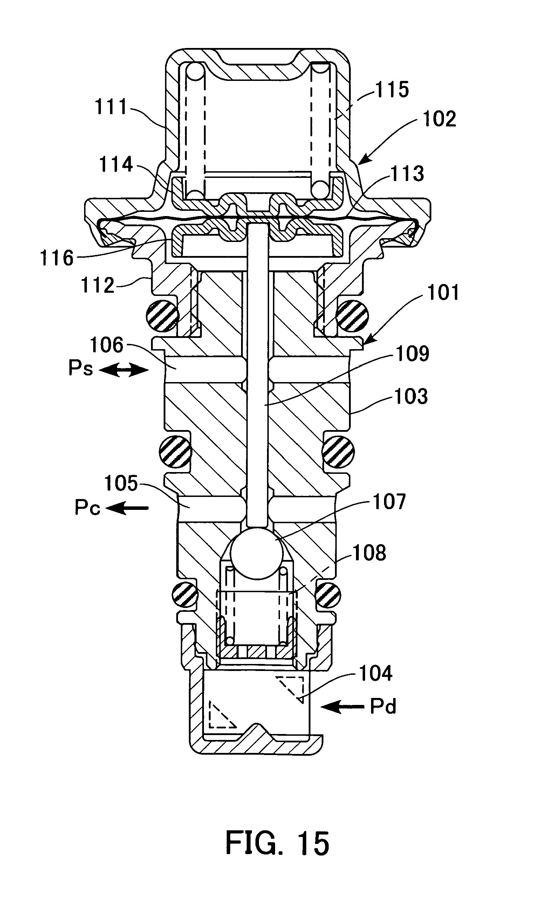

FIG. 15 is a cross-sectional view of an example of the arrangement of a conventional control valve for an internal variable control compressor.

The control valve for a compressor includes a valve main unit 101 and a power element 102 which drivingly controls the valve main unit 101.

In a body 103 of the valve main unit 101, there are formed a port 104 communicating with a discharge chamber of the compressor, for introducing discharge pressure Pd, a port 105 communicating with a crankcase of the compressor, for outputting controlled pressure, i.e. crankcase pressure PC, and a port 106 communicating with a suction chamber of the compressor, for receiving suction pressure Ps. In a refrigerant passage which communicates between the port 104 and the port 105, a ball valve element 107 is disposed such that it seats on a valve seat integrally formed with the body 103 from the port 104 side. The ball valve element 107 is urged in the valve-closing direction by a spring 108. Further, a transmitting member 109 is held on the axis of the body 103 in a manner axially movable back and forth, for being brought into contact with the ball valve element 107 to be drivingly controlled thereby.

The power element 102 is configured such that a thin-film diaphragm 113 is held between an upper housing 111 and a lower housing 112 in a manner dividing between the upper housing 111 and the lower housing 112. More specifically, the upper housing 111 and the lower housing 112 are rigidly joined by swaging in a state sandwiching an outer periphery of the diaphragm 113 therebetween, such that a vacuum chamber is formed on the upper housing 111 side. In the vacuum chamber on the upper housing 111 side, there are arranged a disc 114 disposed in contact with the diaphragm 113 for spring-receiving use, and a spring 115 urging the disc 114 toward the diaphragm 113 (i.e., in the valve-opening direction). On the other hand, the lower housing 112 is engaged with the end of the body 103 in a state having the upper housing 111 joined thereto. Within the lower housing 112, the end of the transmitting member 109 extending from the body 103 is connected to the diaphragm 113 via a disc 116.

Further, the control valve is displaced upward/downward as viewed in FIG. 15 in response to suction pressure Ps received by the diaphragm 113, the amount of lift of the ball valve element 107 is determined by the amount of the displacement, whereby the flow rate of refrigerant supplied from the discharge chamber into the crankcase is controlled. By this operation, the control valve varies the amount of refrigerant discharged from the variable displacement compressor while controlling the pressure Pc in the crankcase such that suction pressure Ps is maintained constant.
[Patent Literature 1] Japanese Unexamined Patent Publication No. 2004-218443 (FIG. 2).

### Disclosure of the Invention

### Problem to be Solved by the Invention

Such a control valve for an internal variable control compressor is used for a refrigeration cycle using chlorofluorocarbon (e.g. HFC-134a) as refrigerant at present, since it is limited in pressure resistance due to the use of the thin-film diaphragm as the pressure-sensing member.

More specifically, when chlorofluorocarbon is used as refrigerant, if the temperature of the refrigerant changes within a range of 0 to 15 degrees Celsius or so, discharge pressure Pd varies within a range of about 0.5 to 3 Mpa, and suction pressure Ps varies in a range of about 0.3 to 0.45 Mpa.

By the way, due to the global warming issue, it is proposed that carbon dioxide is used as refrigerant in the refrigeration cycle of an automotive air conditioner instead of chlorofluorocarbon. The basic operation of the refrigeration cycle using carbon dioxide as refrigerant is also the same in principle as that of a refrigeration cycle using chlorofluorocarbon. That is, such a refrigeration cycle is constructed by piping designed such that refrigerant flows from the compressor, through a gas cooler, an expansion valve, an evaporator, and a liquid receiver, and returns to the compressor. The carbon dioxide refrigerant in gas phase is compressed by the compressor, and the compressed high-temperature, highpressure refrigerant in gas phase is cooled by the gas cooler. Next, after being decompressed by the expansion valve, the refrigerant in gas-liquid two-phase is evaporated in the evaporator, where air in the vehicle compartment is deprived of latent heat of vaporization to be cooled, and the refrigerant is separated into gas and liquid phases by the liquid receiver. The separated carbon dioxide in gas phase is returned to the compressor.

However, in the refrigeration cycle using carbon dioxide as the refrigerant, suction pressure Ps of the compressor becomes approximately equal to 3.5 to 6.5 MPa, which is larger than the refrigeration cycle using chlorofluorocarbon by an order of magnitude. This makes it impossible for the thin-film diaphragm to withstand suction pressure Ps, and hence depending on the case, there is a possibility that the diaphragm is broken or deformed to have its original characteristics lost. Further, in order to cause such a pressure-sensing member to effectively operate, it is necessary to use a spring fairly large in size with a load of approximately 35 kg/cm², for supporting the diaphragm. Therefore, this makes it difficult to design a control valve if the control valve is to have the current size of the conventional control valve for the compressor.

The present invention has been made in view of the above points, and an object thereof is to provide a control valve for an internal variable control compressor which is improved in pressure resistance strength of a pressure-sensing member.

### Means for Solving the Problem

To solve the above problem, the present invention provides a control valve for a compressor that varies displacement of the compressor, comprising a body that has a refrigerant passage formed therein, a valve element that moves to and away from a valve seat formed in the body in order to adjust a flow rate of refrigerant when causing part of discharge refrigerant of the compressor to flow into a control chamber, and a power element that transmits a driving force which varies according to suction pressure of refrigerant sucked into a suction chamber of the compressor to the valve element via a transmitting member, wherein the power element comprises a diaphragm that senses the suction pressure to be displaced in an axial direction, and at least one snap-acting disc disposed to support the diaphragm while being in contact with the diaphragm from a side of the diaphragm opposite from a side where the valve element is disposed.

According to the control valve for a compressor, a snap-acting disc is disposed in contact with a side of a diaphragm forming the pressure-sensing member opposite from a side where the transmitting member is disposed. With this arrangement, even if the diaphragm receives a large suction pressure when the control valve is closed, since the snap-acting disc receives suction pressure, from the opposite side, the diaphragm is prevented from being broken or deformed. On the other hand, although the snap-acting disc is inverted when a load received from the diaphragm in the valve-closing direction becomes higher than a predetermined value when the control valve is closed, since the transmitting member is already free from the valve element and the snap-acting disc, the operation of the valve element for control is not impaired.

Further, the present invention provides a control valve for a compressor that varies displacement of the compressor, comprising a body that has a refrigerant passage formed therein, a valve element that moves to and away from a valve seat formed in the body in order to adjust a flow rate of refrigerant when causing part of discharge refrigerant of the compressor to flow into a control chamber, and a power element that transmits a driving force which varies according to suction pressure of refrigerant sucked into a suction chamber of the compressor to the valve element via a transmitting member, wherein the power element is formed by disposing at least one thin-film snap-acting disc between an upper housing and a lower housing such that the thin-film snap-acting disc is sandwiched between the upper housing and the lower housing, and performing circumferential welding of peripheries thereof, and is configured such that an axial displacement of the snap-acting disc caused by sensing the suction pressure at a central part thereof gives a driving force transmitted to the valve element via the transmitting member.

According to the control valve, a snap-acting disc forms a pressure-sensing member instead of the diaphragm. When the upper housing and the lower housing are assembled, the periphery of the snap-acting disc is fixed by welding at the same time, which makes the working much simplified. Further, the snap-acting disc is displaced in response to suction pressure, using the vicinity of is periphery as a support. This makes it possible to maintain the strength of the pressure-sensing member higher than when the diaphragm is used.

### Effects of the Invention

In the control valve for a compressor according to the present invention, a snap-acting disc is disposed in a pressure-sensing section to receive suction pressure. This makes it possible to improve pressure resistance strength of the pressure-sensing section.

The above and other objects, features and advantages of the present invention will become apparent from the following description when taken in conjunction with the accompanying drawings which illustrate preferred embodiments of the present invention by way of example.

### Brief Description Of the Drawings

FIG. 1 is a cross-sectional view of a control valve for a compressor, according to a first embodiment of the present invention, in a state accommodated in a housing of a variable displacement compressor.
FIG. 2 is a cross-sectional view of the arrangement of the control valve.
FIG. 3 is an enlarged view of an area A in FIG. 2.
FIG. 4 is a explanatory view illustrating spring characteristics of a snap-acting disc.
FIG. 5 is a cross-sectional view showing the control valve at the moment at which the valve is fully closed.
FIG. 6 is a cross-sectional view showing the snap-acting discs in a state completely inverted.
FIG. 7 is a partial cross-sectional view showing the arrangement of essential parts of a variation of the control valve.
FIG. 8 is a cross-sectional view of the arrangement of a control valve for a compressor according to a second embodiment of the present invention.
FIG. 9 is a cross-sectional view of a first variation of the control valve.
FIG. 10 is a cross-sectional view of a second variation of the control valve.
FIG. 11 is a cross-sectional view of the arrangement of a control valve for a compressor according to a third embodiment of the present invention.
FIG. 12 is a cross-sectional view of the arrangement of a control valve for a compressor according to a fourth embodiment of the present invention.
FIG. 13 is a cross-sectional view of the control valve according to the first embodiment in a state accommodated in the housing of the compressor.
FIG. 14 is a partial cross-sectional view of the compressor in an operating state during control operation.
FIG. 15 is a cross-sectional view of an example of the arrangement of a conventional control valve for a internal variable control compressor.

### Best Mode for Carrying out the Invention

Hereafter, embodiments of the present invention will be described in detail with reference to the drawings. It should be noted that the positional relationship between components is sometimes expressed as "upper" or "lower" with reference to the states shown in the drawings, for convenience sake.

### [First Embodiment]

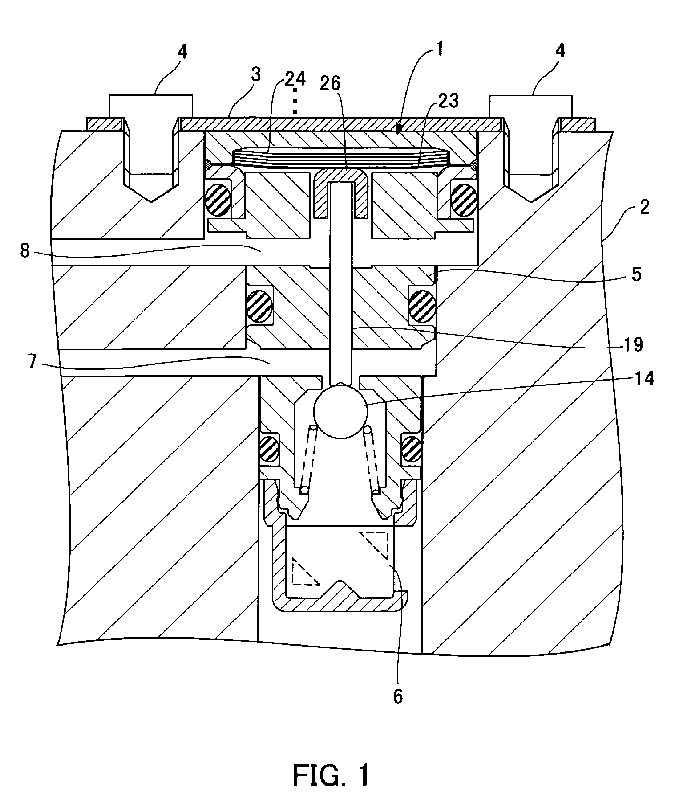

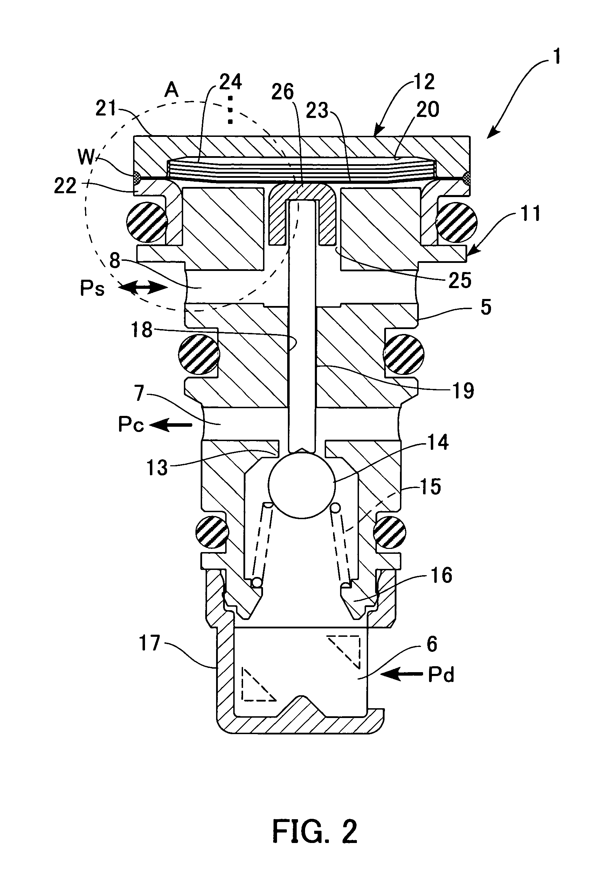

FIG. 1 is a cross-sectional view of a control valve for a compressor, according to a first embodiment of the present invention, in a state accommodated in a housing of a variable displacement compressor. FIG. 2 is a cross-sectional view of the arrangement of the control valve.

As shown in FIG. 1, the control valve 1 is inserted and disposed in a refrigerant passage in the form of a stepped hole formed in a housing 2 of the variable displacement compressor, and is fixed in the housing 2 by bolts 4 via a plate-shaped cover 3. The control valve 1 includes a body 5 through which refrigerant passages are formed. The body 5 is formed with a port 6 communicating with a discharge chamber of the variable displacement compressor, a port 7 communicating with a crankcase as a control chamber of the compressor, and a port 8 communicating with a suction chamber.

As shown in FIG. 2, the control valve 1 includes a valve main unit 11 containing a valve section, and a power element 12 which controls the valve section such that the valve section opens and closes.

The body 5 of the valve main unit 11 is made of brass, and is formed as mentioned above with the port 6 communicating with the discharge chamber to introduce discharge pressure Pd, the port 7 communicating with the crankcase to output controlled pressure, that is, crankcase pressure PC, and the port 8 communicating with the suction chamber to receive suction pressure Ps. A ball valve element 14 is disposed in a refrigerant passage communicating between the port 6 and the port 7, such that the ball valve element 14 moves to and away from a valve seat 13 integrally formed with the body 5 on the port 6 side. The ball valve element 14 is urged in the valve-closing direction by a conical spring 15. An opening in a bottom end of the body 5 where the port 6 is disposed is swaged inward to form a spring-receiving portion 16. One end of the conical spring 15 supports the ball valve element 14, and the other end of the same is supported by the spring-receiving portion 16. Further, the opening in the bottom end of the body 5 is capped by a strainer 17 to prevent foreign matter from entering.

A stainless-steel transmitting member 19 having one end brought into contact with the ball valve element 14 for being drivingly controlled thereby is slidably inserted into a guide hole 18 formed along the axis of the body 5, and is held in a manner movable back and forth in the axial direction.

On the other hand, the power element 12 is formed by assembling a lid-like upper housing 21 having a shallow spring accommodating portion 20, and a hollow cylindrical lower housing 22 having a flange at an opening in one end thereof, such that a thin-film metal diaphragm 23 is sandwiched between the upper housing 21 and the lower housing 22. Four snap-acting discs 24 having the same shape are disposed in layers in the spring accommodating portion 20 of the upper housing 21. The upper housing 21, the lower housing 22, the diaphragm 23, and the snap-acting discs 24 are all made of stainless-steel.

More specifically, the power element 12 is made by placing the snap-acting discs 24 in the spring accommodating portion 20 of the upper housing 21, placing the diaphragm 23 such that the periphery of the diaphragm 23 is held between the bottom face of the peripheral end of the upper housing 21 and the flange of the lower housing 22 and performing circumferential welding W along a boundary of these layered parts. The welding is performed by laser welding under vacuum atmosphere, so that a space surrounded by the upper housing 21 and the diaphragm 23 is placed under vacuum.

Then, the power element 12 is assembled to the valve main unit 11 by press-fitting the lower housing 22 on the top end of the body 5. In the central part of the top end of the body 5, a refrigerant passage 25 communicating between the port 8 and the inside of the lower housing 22 is formed such that suction pressure Ps can be introduced to the underside of the diaphragm 23. Further, the transmitting member 19 has the top end thereof inserted in the refrigerant passage 25 and is connected to the underside of the diaphragm 23 via a disc 26 having a bottomed hollow cylindrical shape. Therefore, displacement of the diaphragm 23 is transmitted to the ball valve element 14 via the disc 26 and the transmitting member 19 to cause the valve section to open and close.

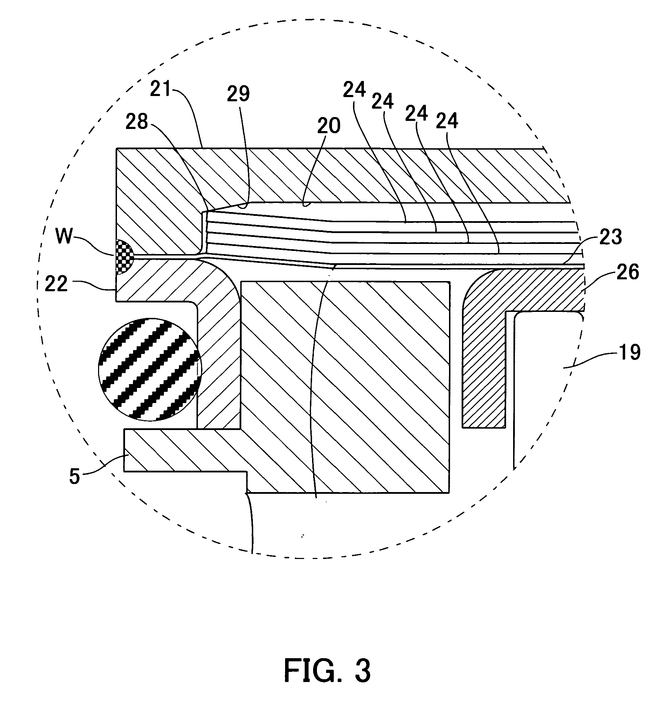

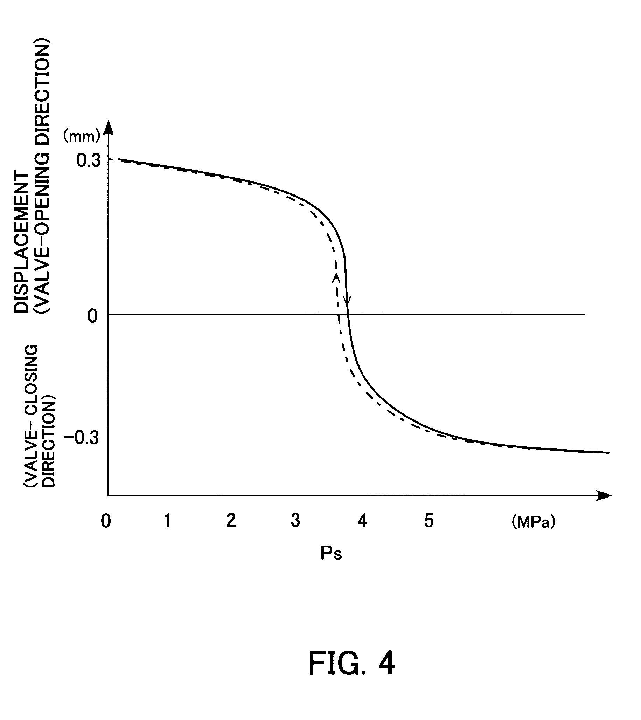

FIG. 3 is an enlarged view of an area A in FIG. 2. FIG. 4 is an explanatory view illustrating spring characteristics of a snap-acting disc. A horizontal axis in FIG. 4 represents suction pressure Ps, and a vertical axis represents displacement of the snap-acting disc (to be more precise, a position of the central part with respect to the periphery of the snap-acting disc).

As shown in FIG. 3, each snap-acting disc 24 is formed by stamping out stainless plate into a circular shape, and then pressing the circular stainless plate into a shape trapezoidal in cross-section. For example, the snap-acting disc 24 is formed such that it has a thickness of 0.25 mm, an outer diameter of 16 mm, and a diameter of a central flat part of 10 mm, and the periphery thereof is tapered. In illustrated example, four of the snap-acting discs 24 are stacked in the direction of thickness, and the bottom snap-acting disc 24 is brought into contact with the diaphragm 23 to urge the diaphragm 23 downward (in the valve-opening direction). An edge 28 of the periphery of the top snap-acting disc 24 is stopped by a sidewall of the upper housing 21, and the stack of the snap-acting discs 24 is held in a state sandwiched between the diaphragm 23 and the upper housing 21. A contact surface 29 of the upper housing 21 for being brought into contact with the edge 28 is tapered at an inclination angle of e.g. 15 degrees, such that a support for supporting the snap-acting discs 24 (a contact point or a contact line between the edge 28 and the contact surface 29 forms the support in the present embodiment) performing an inverting operation (operation in which a direction in which a central part of each snap-acting disc 24 is convex is inverted) is hardly changes before or after the inverting operation of the snap-acting discs 24. Moreover, a shape of the inner wall of the upper housing 21 is formed such that it substantially matches the inverted shape of the snap-acting discs 24, and the spring accommodating portion 20 is formed to be small in size. For this reason, the upper housing 21 is configured to be small, and hence it greatly contributes to downsizing of the control valve 1.

As shown in FIG. 4, the stack of the four snap-acting discs 24 has characteristics that it is displaced in the valve-opening direction or the valve-closing direction depending on the suction pressure Ps. That is, each snap-acting disc 24 has a shape that the central part thereof is convex toward the transmitting member 19, and hence the amount of displacement (particularly, a position of the central part of the snap-acting disc 24 with respect to the support at the periphery of the same) is set to be approximately 0.3 mm when the suction pressure Ps received by the diaphragm 23 is in a low range. Then, when suction pressure Ps becomes higher, the stack of the snap-acting discs 24 is displaced in the valve-closing direction little by little, and when suction pressure Ps becomes higher than a predetermined value (approximately 3.7 MPa in the present embodiment), the stack becomes flat. At this time, the ball valve element 14 is seated on the valve seat 13 to close the valve. As suction pressure Ps becomes equal to or higher than the predetermined value, the stack is inverted in shape, and the amount of displacement changes up to approximately -0.3 mm. At this time, the control valve 1 maintains the fully closed state. If suction pressure Ps inversely becomes lower from this state, the snap-acting discs 24 are displaced in the valve-opening direction little by little, and when suction pressure Ps becomes lower than the predetermined value (approximately 3.5 MPa in the present embodiment), the stack returns to the flat shape. As suction pressure Ps becomes equal to or lower than the predetermined value, the amount of displacement changes up to approximately 0.3 mm. At this time, the ball valve element 14 is lifted from the valve seat 13 to open the valve. It should be noted that the snap-acting discs 24 have so-called hysteresis characteristics that displacement changes in different ways between when suction pressure Ps increases and when suction pressure Ps decreases, and therefore, the stack of the snap-acting discs 24 is used such that insofar as the control valve 1 is open to perform a control operation, the stack of the snap-acting discs 24 is not inverted.

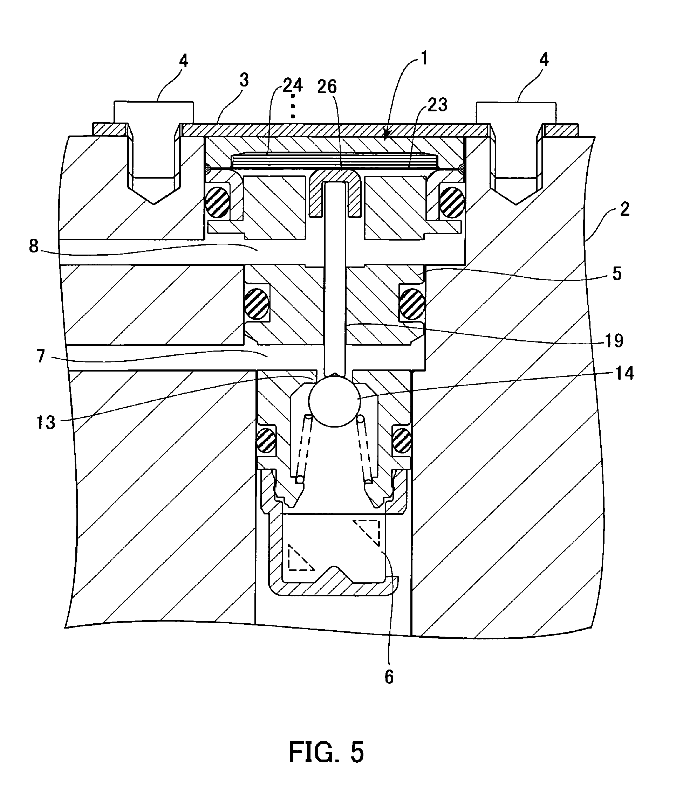

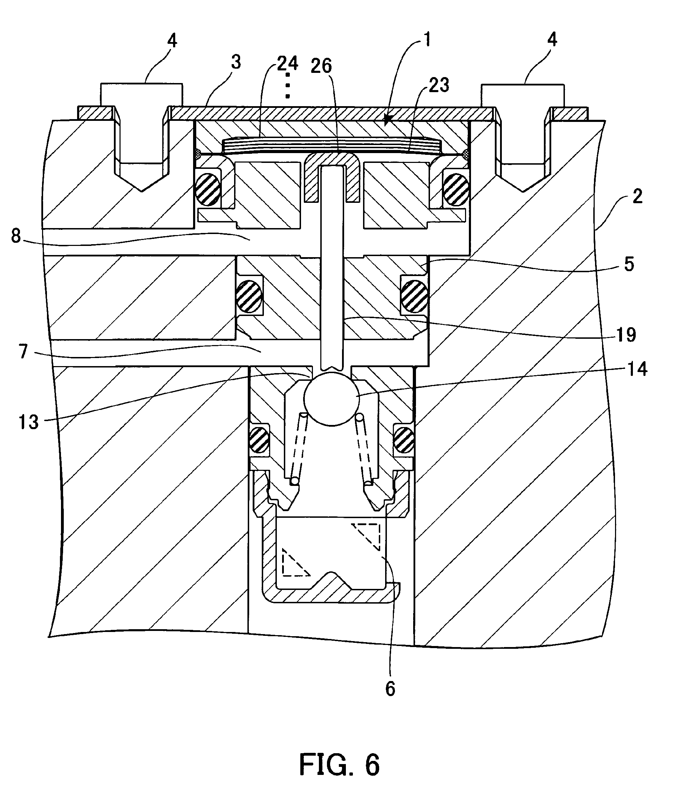

Next, a description will be given of the operation of the control valve. FIG. 5 is a cross-sectional view showing the control valve at the moment at which the valve is fully closed. FIG. 6 is a cross-sectional view showing the snap-acting discs in a state completely inverted. It should be noted that FIG. 1, with reference to which the above description has been given, shows an open state of the valve.

In the control valve 1, the diaphragm 23 receives the suction pressure Ps to be displaced upward or downward as viewed in the figures. The amount of the displacement determines the amount of lift of the ball valve element 14, which in turn controls the flow rate of refrigerant supplied from the discharge chamber into the crankcase. By this operation, the control valve 1 controls crankcase pressure PC such that suction pressure Ps becomes constant to vary the discharge amount of refrigerant discharged from the variable displacement compressor.

More specifically, when suction pressure Ps is low (lower than approximately 3.7 MPa), as shown in FIG. 1, a spring load by the stack of the snap-acting discs 24 is transmitted to the ball valve element 14 via the diaphragm 23, the disc 26, and the transmitting member 19, whereby the valve section is made open. At this time, discharge pressure Pd introduced via the port 6 turns into crankcase pressure PC controlled via the valve section to be introduced to the crankcase. This controls the displacement of the variable displacement compressor.

Then, when suction pressure Ps increases to become equal to the predetermined pressure (approximately 3.7 MPa in the illustrate example), as shown in FIG. 5, the stack of the snap-acting discs 24 starts to be inverted in shape. The illustrated example is configured such that when the diaphragm 23 and the snap-acting discs 24 become flat or horizontal, the ball valve element 14 is seated on the valve seat 13 to realize the valve-closed state.

Then, when suction pressure Ps becomes equal to or higher than the predetermined pressure, as shown in FIG. 6, the stack of the snap-acting discs 24 completes inversion and is supported by the inner wall of the upper housing 21 in a manner brought into substantially close contact therewith. At this time, the transmitting member 19 may move away from the ball valve element 14 seated on the valve seat 13, as shown in FIG. 6, depending on the magnitude of crankcase pressure PC.

On the other hand, when suction pressure Ps decreases from the state shown in FIG. 6 to become lower than the predetermined pressure (approximately 3.5 MPa in the illustrated example), the control valve 1 operates in an opposite way from the above-described operation to shift to the open state, and this makes it possible to perform the minimum displacement operation. When the control valve 1 opens in this way, suction pressure Ps becomes higher, and when suction pressure Ps reaches the predetermined pressure, the stack of the snap-acting discs 24 is inverted in shape again. According to such an operation of the snap-acting discs 24, suction pressure Ps is controlled such that it is fixed at the predetermined pressure.

As described above, in the control valve 1 according to the present embodiment, the stack of the snap-acting discs 24 is disposed on an opposite side of the diaphragm 23 forming the pressure-sensing section, from the transmitting member 19. Therefore, even if the diaphragm 23 receives high suction pressure Ps when the control valve 1 is open, since the snap-acting discs 24 receive suction pressure Ps from the opposite side, the diaphragm 23 is prevented from being broken or deformed. Therefore, this makes it possible to improve pressure resistance strength of the pressure-sensing section. As a result, even if the control valve 1 is applied to a refrigeration cycle where suction pressure Ps becomes high, including one using carbon dioxide as refrigerant, it is possible to secure a sufficient pressure resistance strength.

On the other hand, the stack of the snap-acting discs 24 operates to be inverted in shape when the load in the valve-closing direction received from the diaphragm 23 becomes equal to or larger than the predetermined value, so that the valve-closing operation of the ball valve element 14 is not impaired. Further, since the snap-acting discs 24 return to the original shapes when the load in the valve-closing direction received from the diaphragm 23 becomes less than the predetermined value, the snap-acting discs 24 can continue to support the diaphragm 23.

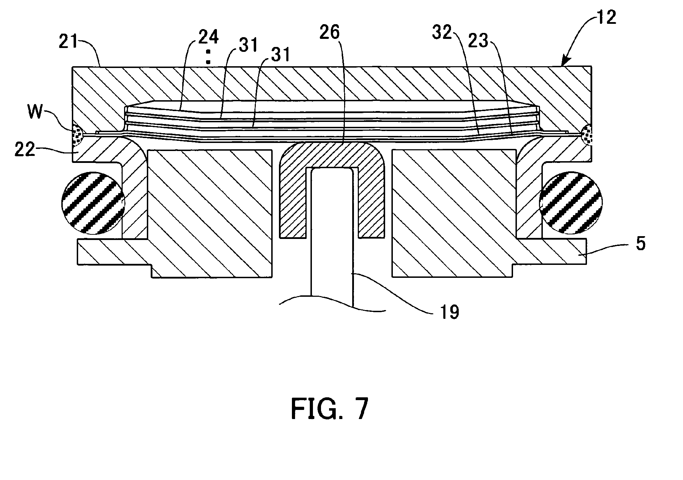

Although no related description is given in the present embodiment, in order to prevent the deformation of the stack of the snap-acting discs 24 and that of the diaphragm 23 from being impaired by friction between the stacked snap-acting discs 24, or friction between the snap-acting discs 24 and the diaphragm 23, a friction-reducing structure may be provided between the snap-acting discs 24, or between the snap-acting discs 24 and the diaphragm 23. FIG. 7 is a partial cross-sectional view of the arrangement of essential parts of a variation of the control valve.

More specifically, an interference prevention film 31 may be interposed between each adjacent pair of the snap-acting discs 24. Further, an interference prevention film 32 may be interposed between the stack of the snap-acting discs 24 and the diaphragm 23. Thin films of polyimide or thin films of Teflon (registered trademark) may be used as these films. Alternatively, instead of such a film, grease may be applied between the snap-acting discs 24, or between the stack of the snap-acting discs 24 and the diaphragm 23.

Although in the present embodiment, the diaphragm 23 and the transmitting member 19 are indirectly connected to each other via the disc 26, by way of example, the disc 26 may be omitted to bring the diaphragm 23 and the transmitting member 19 into direct contact with each other.

Further, although in the present embodiment, a stack is formed by stacking four snap-acting discs 24, by way of example, the number of the snap-acting discs 24 forming the stack is not limited to four, but it is possible to select the number appropriately depending on the spring load to be obtained.

Moreover, although in the present embodiment, a vacuum chamber is formed by the upper housing 21 and the diaphragm 23, by way of example, since the upper housing 21 and the lower housing 22 are joined by laser welding, a space surrounded by the upper housing 21 and the diaphragm 23 need not be under vacuum, but the space may be under atmospheric pressure or the like. For example, welding may be performed under atmospheric pressure, or there a hole may be formed through the upper housing 21, for communication between the inside and the outside thereof.

### [Second Embodiment]

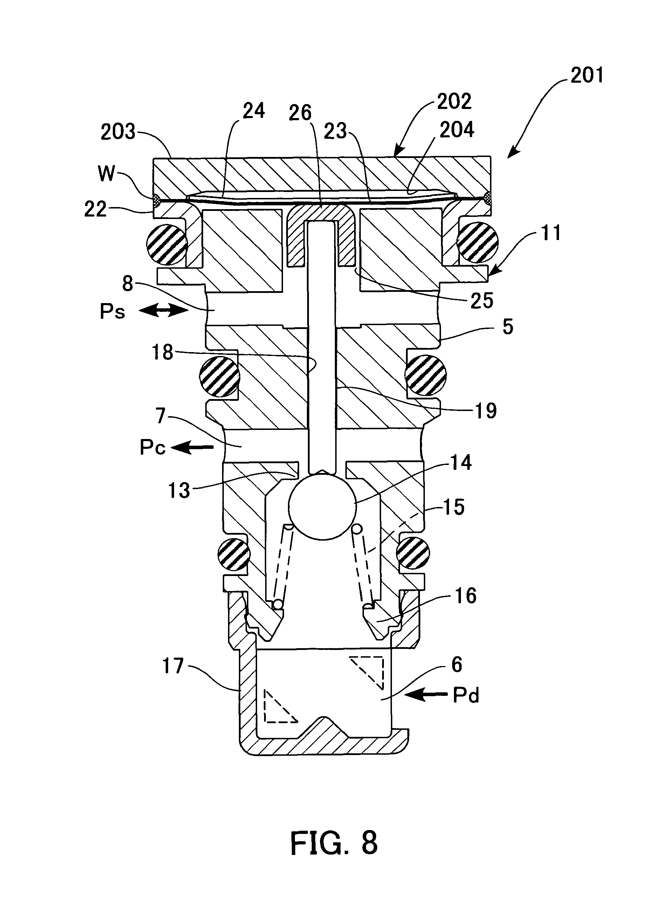

Next, a description will be given of a second embodiment of the present invention. A control valve for a compressor according to the present embodiment is configured similarly to the control valve according to the first embodiment, except that only one snap-acting disc is disposed. Therefore, description of component parts configured substantially similarly to those of the component parts of the first embodiment is omitted as deemed appropriate while denoting the component parts by identical reference numerals. FIG. 8 is a cross-sectional view of the arrangement of the control valve according to the second embodiment of the present invention.

In the control valve 201, only one snap-acting disc 24 is disposed in an upper housing 203 of a power element 202. Accordingly, a spring accommodating portion 204 of the upper housing 203 is also configured to be small. However, the control valve 201 is designed such that a desired spring load can be obtained by the one snap-acting discs 24.

Also in the control valve 201 according to the present embodiment, since the snap-acting disc 24 is disposed on an opposite side of the diaphragm 23 from the transmitting member 19, even if the diaphragm 23 receives relatively high suction pressure Ps when the control valve 201 is closed, the snap-acting disc 24 receives the suction pressure Ps, from the opposite side. As a result, the diaphragm 23 is prevented from being broken or deformed, which makes it possible to improve pressure resistance strength of the pressure-sensing section. Therefore, if the spring load which one snap-acting disc 24 has is large, the control valve 201 can be applied to a refrigeration cycle where suction pressure Ps is high, such as one using carbon dioxide or the like. Moreover, even if the spring load which one snap-acting disc 24 has cannot withstand the refrigeration cycle using carbon dioxide or the like, it is possible to apply the same to the refrigeration cycle using chlorofluorocarbon (i.e. HFC-134a) or refrigerant which is used under higher pressure than chlorofluorocarbon.

It should be noted that various variations of the control valve having one snap-acting disc 24 disposed therein as described above can be envisaged.

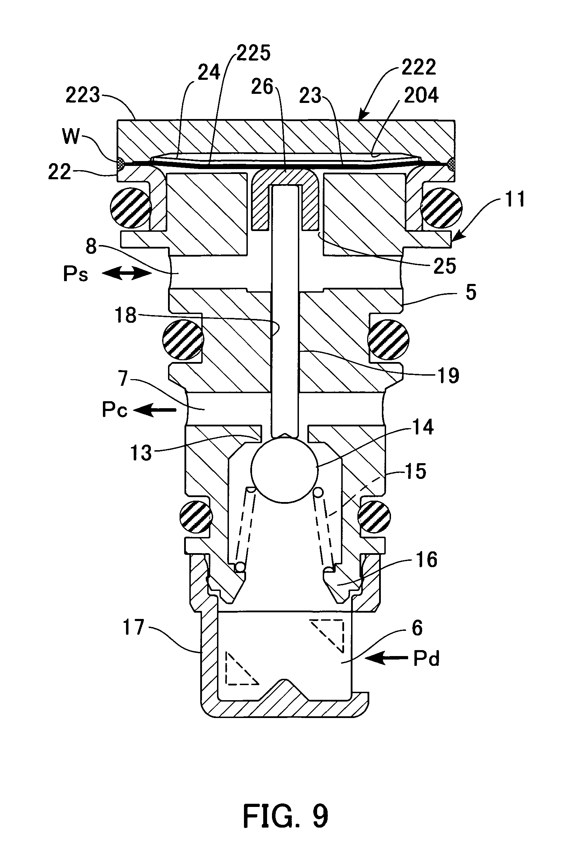

FIG. 9 is a cross-sectional view of a first variation of the control valve.

As shown in FIG. 9, an interference prevention film 225 may be interposed between the snap-acting disc 24 of a power element 222 and the diaphragm 23. A thin film of polyimide or a thin film of Teflon (registered trademark) may employed as this film. Alternatively, grease may be applied between the snap-acting disc 24 and the diaphragm 23. The film 225 is fixed such that the periphery of the film 225 is held between an upper housing 223 and the lower housing 22 together with the diaphragm 23.

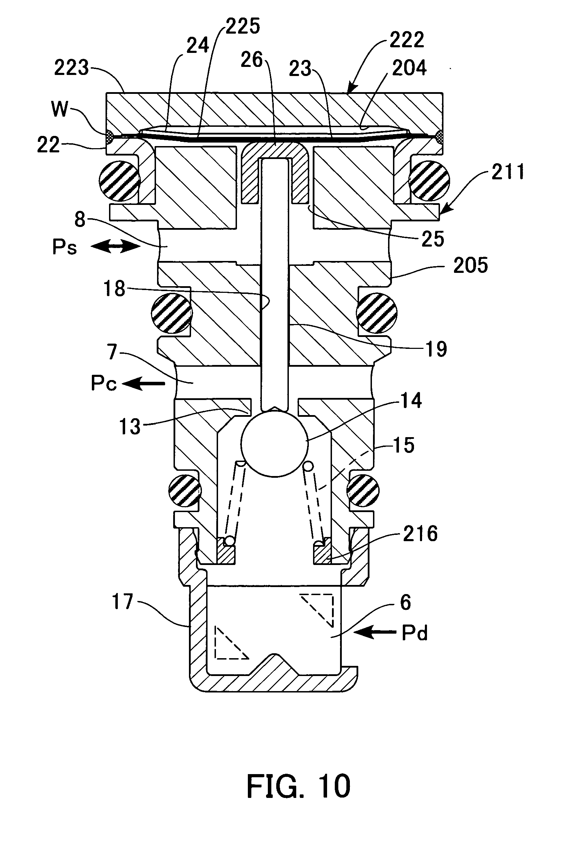

FIG. 10 is a cross-sectional view of a second variation of the control valve.

As shown in FIG. 10, the bottom opening of a body 205 of a valve main unit 211 is not swaged, but a ringshaped spring-receiving member 216 may be press-fitted into the bottom opening to support the conical spring 15 urging the ball valve element 14 in the valve-closing direction. In this way, the load of the conical spring 15 can be adjusted by the amount of press-fitting of the spring-receiving member 216.

It should be noted that the structure of the spring-receiving member is not limited to that shown in the drawing, various shapes can be applied. Further, a screw portion may be formed in the bottom opening of the body 205 and on the another spring receiving member, and the load of the conical spring 15 may be adjusted by the screwing amount of the spring receiving member into the body 205.

### [Third Embodiment]

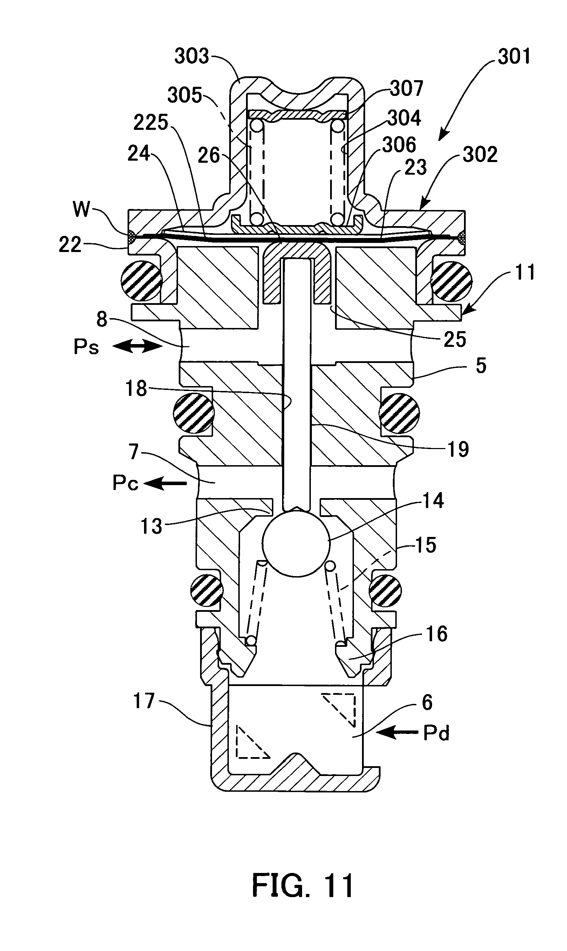

Next, a description will be given of a third embodiment of the present invention. A control valve for a compressor according to the present embodiment is configured similarly to the control valve according to the second embodiment, except that the power element is configured differently. Therefore, description of component parts configured substantially similarly to those of the component parts of the second embodiment is omitted as deemed appropriate while denoting the component parts by identical reference numerals. FIG. 11 is a cross-sectional view of the arrangement of the control valve according to the third embodiment.

In the control valve 301, a spring accommodating portion 304 of an upper housing 303 of a power element 302 is formed to be large in size, and a auxiliary spring 305 in a coil form is disposed for providing an urging force in a valve-opening direction for assisting the spring force of the snap-acting discs 24. A disc-shaped spring receiver 306 is interposed between the snap-acting disc 24 and the auxiliary spring 305, and a disc-shaped spring receiver 307 is interposed between an upper wall surface of the upper housing 303 and the snap-acting disc 24. Therefore, the spring load of the auxiliary spring 305 is transmitted to the snap-acting disc 24 via the spring receiver 306, and the spring receiver 306 supports the snap-acting disc 24 from a side thereof opposite from the diaphragm 23. The spring load of the auxiliary spring 305 can be adjusted by deforming a central part of the upper wall surface of the upper housing 303 by pressing the same, as illustrated in FIG. 11 (corresponds to "a load-adjusting structure").

In the control valve 301 according to the present embodiment as well, the snap-acting disc 24 is disposed on the side of the diaphragm 23 opposite from the transmitting member 19, and therefore, even if the diaphragm 23 receives high suction pressure Ps when the control valve 301 is closed, the snap-acting disc 24 receives the suction pressure Ps, from the opposite side. Further, the auxiliary spring 305 is provided on the opposite side of the snap-acting disc 24 from the diaphragm 23 whereby a lack of sprig load by the snap-acting discs 24 is compensated for. As a result, it is possible to improve pressure resistance strength of the pressure-sensing section more than the second embodiment, whereby the diaphragm 23 is prevented from being broken or deformed. Therefore, the control valve can be applied to the refrigeration cycle where suction pressure Ps becomes high, such as one using carbon dioxide or the like.

Further, since the auxiliary spring 305 is a spring that compensates for a lack of spring load of the snap-acting discs 24, a very large spring load is not required. Therefore, the auxiliary spring 305 rarely makes it difficult to design the control valve 301.

Although the present embodiment shows the configuration in which one snap-acting disc 24 is disposed, a stack of snap-acting discs 24 may be disposed, as in the case of the first embodiment, whereby a spring having a small spring load may be used as the auxiliary spring.

Further, the load-adjusting structure is not limited to the one described above, but there may be used a structure in which the position of a spring receiving member corresponding to the spring receiver 307 can be adjusted by press-fitting or screwing the spring receiving member into the upper housing to thereby adjust the spring load.

### [Fourth Embodiment]

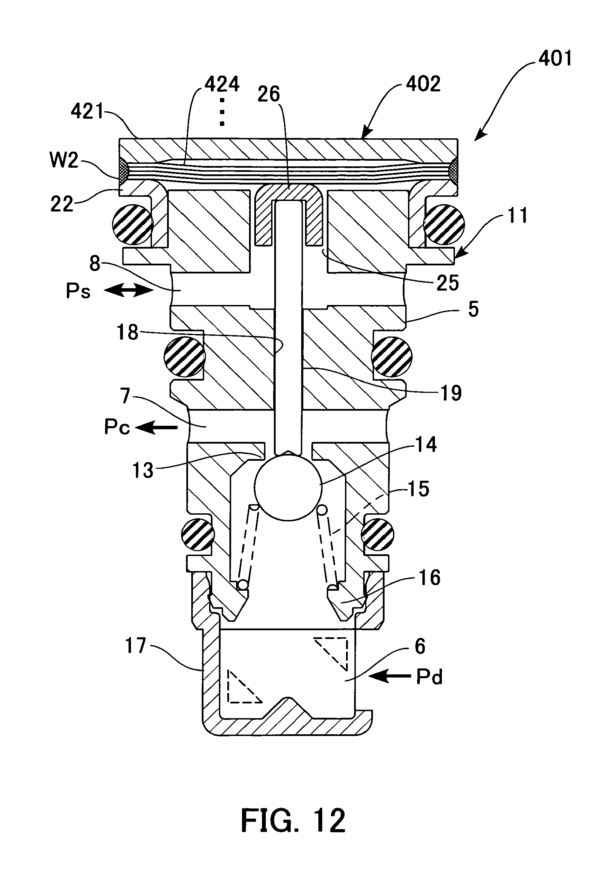

Next, a description will be given of a fourth embodiment of the present invention. A control valve for a compressor according to the present embodiment is configured similarly to that according to the first embodiment, except that a snap-acting disc is used in place of the diaphragm. Therefore, description of component parts configured substantially similarly to those of the component parts of the first embodiment is omitted as deemed appropriate while denoting the component parts by identical reference numerals. FIG. 12 is a cross-sectional view of the arrangement of the control valve according to the fourth embodiment.

A diaphragm is not disposed in a power element 402 of the control valve 401. A stack of four snap-acting discs 424 is fixed in a manner sandwiched between an upper housing 421 and the lower housing 22.

More specifically, the snap-acting discs 424 are configured to be larger in size than the snap-acting discs 24 according to the first embodiment in the radial direction, and has the approximately same outer diameter as the upper housing 421. The power element 402 is formed by arranging the stack of the snap-acting discs 424 between the upper housing 421 and the lower housing 22 in a manner sandwiched therebetween, and performing circumferential welding W2 on peripheries of these layered parts by laser welding. The bottom snap-acting disc 424 has its central part connected to the transmitting member 19 via the disc 26. The stack of the snap-acting discs 424 is capable of performing inverting operation using the vicinity of the periphery thereof as a support, and operates in response to suction pressure Ps of the variable displacement compressor to transmit driving force in the axial direction to the transmitting member 19.

As described hereinabove, in the control valve 401 according to the present embodiment, not the diaphragm but the snap-acting disc 424 forms the pressure-sensing section. When the upper housing 421 and the lower housing 22 are assembled, the stack of the snap-acting discs 424 has its periphery fixed by welding at the same time, which makes the working much simplified. Further, the stack of the snap-acting discs 424 is inverted using the vicinity of its periphery as the support. Since the stack of the snap-acting discs 424 is used in place of the diaphragm, it is possible to maintain the strength of the pressure-sensing section higher than when the diaphragm is used. Therefore, the control valve can be applied to a refrigeration cycle where suction pressure Ps is high, such as one using carbon dioxide as refrigerant.

Although the present embodiment shows the configuration in which the stack of the snap-acting discs 424 and the transmitting member 19 are indirectly connected to each other via the disc 26, by way of example, the disc 26 may be omitted to bring the stack of snap-acting discs 424 and the transmitting member 19 into direct contact with each other.

Although in the present embodiment, the upper housing 421, the stack of the snap-acting discs 424, and the lower housing 22 are joined by laser welding, so that a vacuum chamber is formed by the upper housing 421 and the snap-acting disc 424, a space surrounded by the upper housing 421 and the snap-acting disc 424 need not be under vacuum, but the space may be under atmospheric pressure or the like. For example, welding may be performed under atmospheric pressure, or a hole may be formed through the upper housing 421, for communication between the inside and the outside thereof.

Although in the present embodiment, the description is given of the case where the control valve according to the present invention is applied to the variable displacement compressor to control the pressure in the crankcase as a control chamber of the compressor, it is possible to apply the control valve to a compressor which does not have a variable displacement mechanism. A description will be given of a specific example of the application, hereinafter.

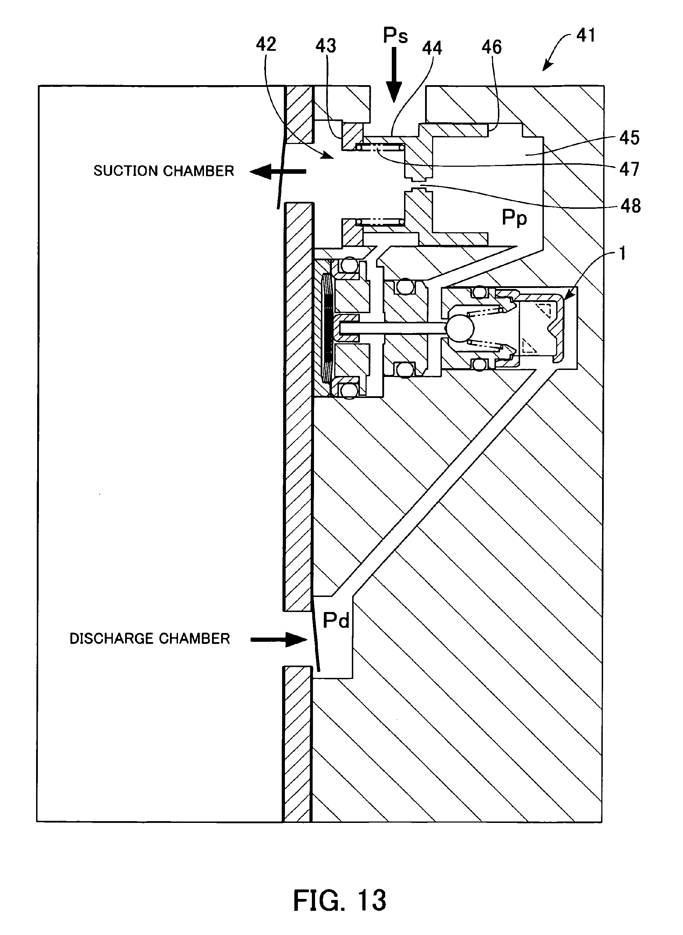

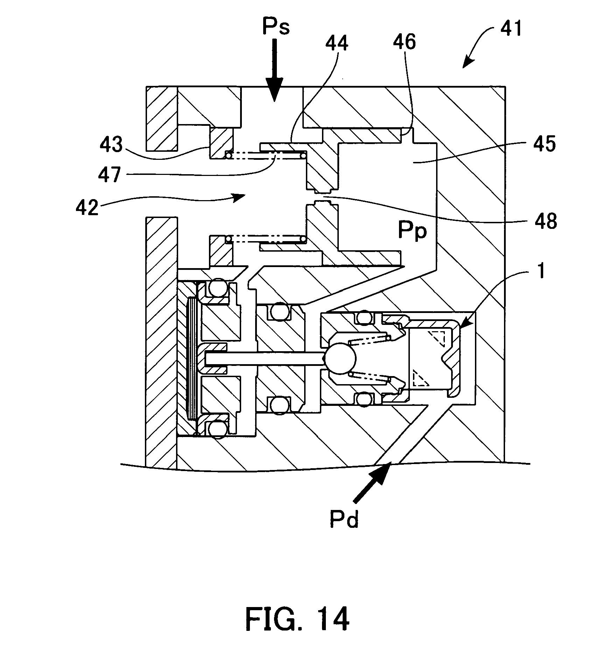

FIG. 13 is a cross-sectional view of the control valve according to the first embodiment in a state accommodated in a housing of a compressor. FIG. 14 is a partial cross-sectional view of the compressor in an operating state during control operation.

The compressor 41 is a type the displacement of which is not varied when it is driven by an engine at a fixed rotational speed, and may be a rotary-type or reciprocating type compressor, such as a rotary compressor or a scroll compressor. Such a compressor 41 can vary the refrigerant discharge capacity by controlling the flow rate of refrigerant sucked into the suction chamber. For this reason, the compressor 41 includes a throttle control valve 42 in a passage on the suction side, and the control valve 1 according to the first embodiment is used for controlling the throttle control valve 42.

The throttle control valve 42 has a valve seat 43 disposed in the passage on the suction side, and a hollow cylindrical valve element 44 is disposed in a manner movable to and away from the valve seat 43. The valve element 44 is integrally formed with a piston 46 disposed in a piston chamber 45 in a manner movable back and forth in the valve-opening/closing direction of the throttle control valve 42, and is urged in the valve-opening direction by a spring 47. It should be noted that the piston chamber 45 forms a control chamber of the throttle control valve 42. Further, an orifice 48 communicating between the passage of the suction side and the piston chamber 45 is formed through the valve element 44.

Here, the control valve 1 is disposed in the compressor 41 such that the port 6 where suction pressure Ps is introduced communicates with the discharge chamber, the port 7 through which the controlled pressure Pp is delivered communicates with the piston chamber 45 of the throttle control valve 42, and the port 8 which receives suction pressure Ps communicates with the passage on the suction side.

In the compressor 41 constructed as described above, when suction pressure Ps is sufficiently lower than a predetermined pressure (e.g. 3.6 MPa), as shown in FIG. 13, the pressure-sensing section is displaced toward the ball valve element 14 in response to low suction pressure Ps, and the displacement causes the control valve 1 to be opened. At this time, discharge pressure Pd is introduced into the piston chamber 45 as the control chamber of the throttle control valve 42 via the opened control valve 1, so that pressure Pp in the piston chamber 45 is high. For this reason, since the piston 46 is pressed in the valve-closing direction, the hollow cylindrical valve element 44 is seated on the valve seat 43, and the throttle control valve 42 is in a fully closed state. Since the control valve 1 is in a state incapable of drawing refrigerant, the compressor 41 is in a state where the refrigerant discharge capacity is small.

On the other hand, when suction pressure Ps increases up to the predetermined pressure (e.g. 3.6 MPa), the pressure-sensing section is displaced, as shown in FIG. 14, to a side opposite from the ball valve element 14 due to high suction pressure Ps, and the displacement causes the control valve 1 to be closed. At this time, since discharge pressure Pd is not introduced into the piston chamber 45, pressure Pp in the piston chamber 45 is made substantially equal to suction pressure Ps via the orifice 48. For this reason, since the piston 46 is pressed in the valve-opening direction by the spring 47, the hollow cylindrical valve element 44 is moved away from the valve seat 43, and the throttle control valve 42 is fully open. Since the control valve 1 is in a state capable of sucking the refrigerant at maximum, the compressor 41 is in a state where the refrigerant discharge capacity is large.

Further, as suction pressure Ps becomes lower from the predetermined pressure to cause the throttle control valve 42 to move from the fully open state shown in FIG. 14 to the fully closed state shown in FIG. 13, the pressure Pp of the piston chamber 45 progressively becomes lower, and the throttle control valve 42 throttles the passage of the suction side in response thereto, and hence the displacement of the compressor 41 can be continuously varied in a decreasing direction.

In this way, in the compressor 41 without the variable displacement mechanism, it is possible to make variable the refrigerant discharge capacity by controlling the pressure Pp in the piston chamber 45 as the control chamber of the throttle control valve 42 using the control valve 1.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### [Description of Reference Numerals]

- 1, 201, 301, 401: control valve for compressor
- 5, 205: body
- 6, 7, 8: port
- 11, 211: valve main unit
- 12, 202, 222, 302, 402: power element
- 13: valve seat
- 14: ball valve element
- 18: guide hole
- 19: transmitting member
- 20, 204, 304: spring accommodating portion
- 21, 203, 223, 421: upper housing
- 22: lower housing
- 23: diaphragm
- 26: disc
- 28: edge
- 29: contact surface
- 31, 32, 225: film
- 41: compressor
- 42: control valve
- 43: valve seat
- 44: valve element
- 45: piston chamber
- 46: piston
- 47: spring
- 48: orifice

## Claims

1. A control valve for a compressor that varies displacement of the compressor, comprising:
a body that has a refrigerant passage formed therein;
a valve element that moves to and away from a valve seat formed in said body in order to adjust a flow rate of refrigerant when causing part of discharge refrigerant of said compressor to flow into a control chamber; and
a power element that transmits a driving force which varies according to suction pressure of refrigerant sucked into a suction chamber of said compressor to said valve element via a transmitting member,
wherein said power element comprises a diaphragm that senses said suction pressure to be displaced in an axial direction, and at least one snap-acting disc disposed to support said diaphragm while being in contact with said diaphragm from a side of said diaphragm opposite from a side where said valve element is disposed.

2. The control valve according to claim 1, wherein said transmitting member is slidably inserted into a guide hole formed in said body to be axially supported therein, and at the same time has one end thereof supporting said valve element, and the other end thereof directly or indirectly connected to said diaphragm.

3. The control valve according to claim 1, wherein said snap-acting disc has a central part having a shape convex toward said valve element, and is deformable by having a direction in which said central part is convex inverted using a periphery of said snap-acting disc as a support.

4. The control valve according to claim 3, wherein said power element is formed such that said thin-film diaphragm is sandwiched between an upper housing and a lower housing,
and wherein said snap-acting disc is disposed in a region surrounded by said upper housing and said diaphragm, and is brought into contact with a side wall of said upper housing such that an edge of a periphery of said snap-acting disc forms the support, thereby being supported thereon.

5. The control valve according to claim 4, wherein a contact surface of said upper housing in contact with said edge of said snap-acting disc is formed to have a tapered shape, and said support is hardly changed in position by an axial displacement of said snap-acting disc.

6. The control valve according to claim 5, wherein said upper housing has an inner wall formed such that said inner wall has a shape substantially matching a shape of said snap-acting disc when said snap-acting disc is deformed by inversion.

7. The control valve according to claim 4, wherein an auxiliary spring is disposed within said upper housing, for urging said snap-acting disc in a valve-opening direction from a side opposite from said diaphragm.

8. The control valve according to claim 7, including a load adjusting structure for adjusting load of said auxiliary spring.

9. The control valve according to claim 1, wherein said power element comprises a plurality of said snap-acting discs, and wherein said snap-acting discs are stacked one upon another by a predetermined number according to a magnitude of suction pressure to be received by said diaphragm.

10. The control valve according to claim 9, wherein a thin film is disposed between said diaphragm and said snap-acting disc, or between said snap-acting discs stacked one upon another by said predetermined number.

11. The control valve according to claim 1, further comprising an another spring that urges said valve element in a valve-closing direction from a side opposite from a side where said power element is disposed,
a spring-receiving member for supporting said another spring from the side opposite from the side where said valve element is disposed and for adjusting the load of said another spring by being fixed after having being adjusted in position.

12. A control valve for a compressor that varies displacement of the compressor, comprising:
a body that has a refrigerant passage formed therein;
a valve element that moves to and away from a valve seat formed in said body in order to adjust a flow rate of refrigerant when causing part of discharge refrigerant of said compressor to flow into a control chamber; and
a power element that transmits a driving force which varies according to suction pressure of refrigerant sucked into a suction chamber of said compressor to said valve element via a transmitting member,
wherein said power element is formed by disposing at least one thin-film snap-acting disc between an upper housing and a lower housing such that said thin-film snap-acting disc is sandwiched between said upper housing and said lower housing, and performing circumferential welding of peripheries thereof, and is configured such that an axial displacement of said snap-acting disc caused by sensing the suction pressure at a central part thereof gives a driving force transmitted to said valve element via said transmitting member.

13. The control valve according to claim 12, wherein said transmitting member is slidably inserted into a guide hole formed in said body to be axially supported therein, and at the same time has one end thereof supporting said valve element, and the other end thereof directly or indirectly connected to said snap-acting disc.

14. The control valve according to claim 12, wherein said snap-acting disc has a central part having a shape convex toward said valve element, and wherein said upper housing has an inner wall having a shape substantially matching a shape of said snap-acting disc when said snap-acting disc is deformed in a direction opposite from a direction in which the central part of said snap-acting disc is convex, using the vicinity of a periphery of said snap-acting disc as a support.
